# EUROPEAN PATENT APPLICATION

(11) **EP 1 237 336 A2**
(43) Date of publication of application: **04.09.2002**
(21) Application number: 01113666.0
(22) Date of filing: 19.06.2001
(51) Int. Cl.: H04L 12/413, H04L 12/46, H04L 29/06, H04L 12/26

(54) **Media converter and link test technique using the same**

(30) Priority: 01.03.2001 JP 2001056484; 01.03.2001 JP 2001056485
(71) Applicant: Allied Telesis Kabushiki Kaisha, Shinagawa-ku, Tokyo 141-8635 (JP)
(72) Inventor: Tanaka, Kazuyasu, Allied Telesis Kabushiki Kaisha, Shinagawa-ku, Tokyo 141-8635 (JP)
(74) Representative: VOSSIUS & PARTNER

(57) **Abstract**

A media converter allowing the response test to be activated from cable side and easy detection of occurrence of a failure is disclosed. A pair of physical-layer interfaces (101, 102) to different types of transmission media are connected through a memory (103) for temporarily storing data to be transferred between the physical-layer interfaces. The media converter determines whether a received block of data stored in the memory includes trigger data uniquely assigned to the media converter in a source address field of the received block of data. Only when the received block of data stored in the memory includes the trigger data, a response block of data (P_{RPL}) corresponding to the received block of data (P_{TRG}) is sent back to a source that has transmitted the received block of data.

## Description

The present invention relates to a media converter for converting from one type of media to another, for example, from an electrical conductor cable such as unshielded twisted pair (hereafter, abbreviated as UTP) to optical fiber. The present invention further relates to a link test method using the media converter and a control method of the media converter.

There has been a lot of talk recently about FTTH (Fiber To The Home) allowing high-speed transmission of multimedia data such as music, moving picture, and medical data by the installation of optical fiber directly to the home or office. In an era of FTTH, a media converter is an indispensable communication device to connect a fiber-optic line to a computer in the home or office.

In general, a media converter has a pair of ports that are to be connected to a fiber-optic cable and a UTP cable, respectively. For each of the ports, a physical-layer device is provided, which supports MII (Media Independent Interface) conforming to IEEE802.3 standards.

In addition, since a media converter converts from one type of media to another, it usually has a missing-link function such that, in case of disconnection in one link, the other link is automatically disconnected. For example, in the event that the link on the fiber-optic side has been disconnected due to some failure on the fiber-optic cable, the media converter automatically disconnects the other link on the UTP cable side.

In the case where such a media converter is used to connect the UTP cable to the fiber-optic cable, it is necessary to perform a link test to check whether each cable is properly connected to an opposite device on a corresponding link.

A conventional media converter is provided with a link-test switch by which a link test function is activated to determine whether each link is properly established. The link status for each port is indicated by a light-emitting diode (LED) provided for each port.

There have been proposed various link test techniques of networks. For example, Japanese Patent Application Unexamined Publication No. 8-331126 discloses a link test method using a special control code to be transmitted between two adjacent switches connected by a link. More specifically, one switch transmits a control code to the other switch, which in turn transmits a response message back to the source switch. The source switch detects the presence or absence of a response to the control code and, when receiving the response message, analyzes it, to determine whether the link normally functions.

However, the above link test technique is used on network switches and is fundamentally different in structure and function from a media converter designed to convert from one type of media to another with a missing-link function.

As described above, since a conventional media converter is set to the test mode by operating the link-test switch, it is impossible to activate the link test from cable side (UTP cable or fiber-optic cable) and therefore difficult to perform the link test rapidly and easily. In other words, the conventional media converter is not designed to be controlled from network side.

When the missing-link function of media converter is activated, the host computer cannot monitor any status of the media converter, even if the media converter operates normally.

Accordingly, when some error occurs in the link through the media converter, the host side cannot specify the location of a failure: in the link from the host to the media converter; in the media converter itself; or in the link distant from the media converter.

An object of the present invention is to provide a media converter and its control method allowing the response test to be activated from cable side.

Another object of the present invention is to provide a failure detecting system and method allowing easy detection of occurrence of a failure and the location thereof in the link including the media converter.

Still another object of the present invention is to provide a media converter suitable for a failure detecting system allowing easy detection of occurrence of a failure and the location thereof in the link including the media converter.

According to the present invention, a media converter for converting from one type of media to another, includes: a first physical-layer interface to a first transmission medium; a second physical-layer interface to a second transmission medium; a memory connected between the first and second physical-layer interfaces, for temporarily storing data to be transferred between the first and second physical-layer interfaces; a determiner for determining whether a received block of data stored in the memory includes predetermined data at a predetermined position of the received block of data; and a controller controlling such that, when it is determined that the received block of data stored in the memory includes the predetermined data, a response block of data corresponding to the received block of data is sent from a corresponding one of the first and second physical-layer interfaces back to a source that has transmitted the received block of data.

According to another aspect of the present invention, a control method for controlling a media converter including: a first physical-layer interface to a first transmission medium; a second physical-layer interface to a second transmission medium; and a memory connected between the first and second physical-layer interfaces, for temporarily storing data to be transferred between the first and second physical-layer interfaces, wherein the control method includes the steps of: a) determining whether a received block of data stored in the memory includes predetermined data at a predetermined position of the received block of data; and b) when it is determined that the received block of data stored in the memory includes the predetermined data, generating a response block of data corresponding to the received block of data; and c) transmitting the response block of data from a corresponding one of the first and second physical-layer interfaces back to a source that has transmitted the received block of data.

According to still anther aspect of the present invention, a control method for controlling a media converter including: a first physical-layer interface to a first transmission medium; a second physical-layer interface to a second transmission medium; and a memory connected between the first and second physical-layer interfaces, for temporarily storing data to be transferred between the first and second physical-layer interfaces, wherein each of the first and second physical-layer interfaces supports MII (Media Independent Interface) conforming to IEEE802.3 standards, wherein the control method includes the steps of: a) determining whether a received block of data stored in the memory includes predetermined data at a predetermined position of the received block of data; b) when it is determined that the received block of data stored in the memory includes the predetermined data, generating a response block of data corresponding to the received block of data; c) determining whether the media converter is in a missing link state such that, when one of the first and second physical-layer interfaces comes into link disconnection, the other one of the first and second physical-layer interfaces also comes into link disconnection; and d) when it is determined that the received block of data stored in the memory includes the predetermined data under missing link state, disabling the missing link state to transmit the response block of data from a corresponding one of the first and second physical-layer interfaces back to a source that has transmitted the received block of data.

According to the present invention, a method for detecting a failure on a link including a plurality of media converters, each of which converts from one type of media to another, includes the steps of: a) transmitting a block of data to each of the media converters, the block of data having identification data of the media converter written in a predetermined position of the block of data; b) determining whether a response block of data is received from a corresponding media converter within a predetermined time period; and c) determining a location of a failure based on a determination result of the step (b).

In the step (c), when a response block of data is not received from a corresponding media converter within a predetermined time period, it may be determined that a failure occurs at a location beyond the corresponding media converter.

According to the present invention, the system for detecting a failure on a link including a plurality of media converters, each of which converts from one type of media to another, includes: a test manager connected to one of the media converters, wherein each of the media converters includes: a first physical-layer interface to a first transmission medium; a second physical-layer interface to a second transmission medium; a memory connected between the first and second physical-layer interfaces, for temporarily storing data to be transferred between the first and second physical-layer interfaces; and a media converter controller determining whether a received block of data stored in the memory includes the identification data of its own at a predetermined position of the received block of data; when it is determined that the received block of data stored in the memory includes the identification data, generating a response block of data corresponding to the received block of data; and transmitting the response block of data from a corresponding one of the first and second physical-layer interfaces back to a source that has transmitted the received block of data. The test manager includes: an interface to a network manager; and a test manager controller transmitting a block of data to each of the media converters, the block of data having identification data of the media converter written in a predetermined position of the block of data; determining whether a response block of data is received from a corresponding media converter within a predetermined time period; and determining a location of a failure based on a determination result.

A media converter with a test manager for use in a failure detection of a link composed of a plurality of types of transmission media, includes: a first physical-layer interface to a first transmission medium; a second physical-layer interface to a second transmission medium; a memory connected between the first and second physical-layer interfaces, for temporarily storing data to be transferred between the first and second physical-layer interfaces; a media converter controller determining whether a received block of data stored in the memory includes the identification data of its own at a predetermined position of the received block of data; when it is determined that the received block of data stored in the memory includes the identification data, generating a response block of data corresponding to the received block of data; and transmitting the response block of data from a corresponding one of the first and second physical-layer interfaces back to a source that has transmitted the received block of data; an interface to a network manager; and a test manager controller transmitting a block of data to each of the media converters, the block of data having identification data of the media converter written in a predetermined position of the block of data; determining whether a response block of data is received from a corresponding media converter within a predetermined time period; and determining a location of a failure based on a determination result.
Fig. 1 is a block diagram showing the internal circuit of a media converter according to a first embodiment of the present invention;
Fig. 2 is a diagram showing a format of a trigger packet used in the first embodiment;
Fig. 3 is a diagram showing a sequence of response test operation in the first embodiment;
Fig. 4 is a flowchart showing a test control operation in the media converter;
Fig. 5 is a flowchart showing a test control operation in a management switch;
Fig. 6 is a block diagram showing the internal circuit of a media converter with test manager according to a second embodiment of the present invention;
Fig. 7 is a schematic diagram showing a network system for explanation of a failure detection method according to a third embodiment of the present invention;
Fig. 8 is a diagram showing a sequence of response test operation in the third embodiment;
Fig. 9 is a flowchart showing a test control operation in the media converter with test manager;
Fig. 10 is a flowchart showing a test control operation in the test manager; and
Fig. 11 is a block diagram showing the internal circuit of a media converter with test manager according to a fourth embodiment of the present invention.

### FIRST EMBODIMENT

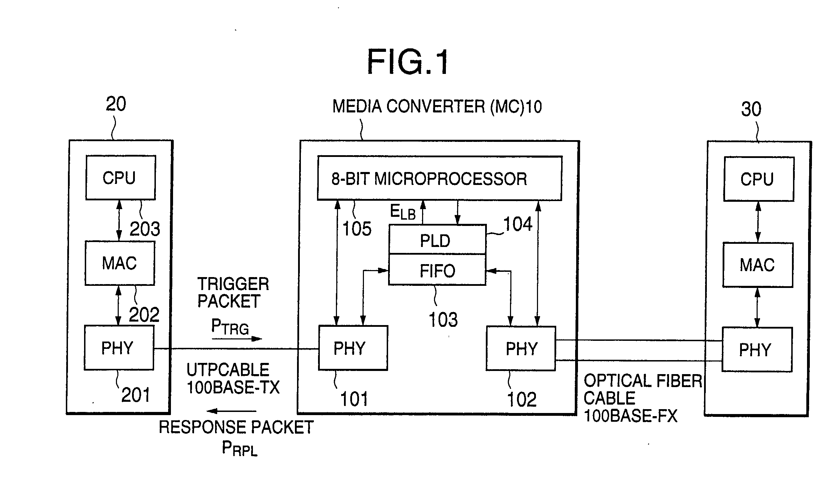

Referring to Fig. 1, a media converter (MC) 10 according to a first embodiment of the present invention is connected to a host computer or management switch 20 through 100BASE-TX:UTP cable and to the other host computer or management switch 30 through 100BASE-FX:optical cable. Needless to say, this system is shown just as an example for simplicity.

### Media converter

The media converter 10 has a pair of ports, which are provided with physical-layer devices (PHYs) 101 and 102, each connected to UTP cable and optical cable, respectively. As described before, the physical-layer devices 101 and 102 support MII (Media Independent Interface) conforming to IEEE802.3 standards.

The media converter 10 is further provided with a FIFO (First-in-first-out) memory 103 that is connected between the physical-layer devices 101 and 102 to absorb frequency deviations between transmission and reception. Data received at one physical-layer device are sequentially written into the FIFO memory 103 and then read out from the FIFO memory 103 in the same sequence to be output to the other physical-layer device.

In addition, the FIFO memory 103 is connected to a PLD (programmable logic device) 104 that has been programmed to provide a predetermined logical function. The PLD 104, as described later, is designed to check data stored in the FIFO memory 103 at a predetermined timing after a packet has been received and, only if the data of the FIFO memory 103 matches predetermined data, to output an enable signal E_{LB} to a microprocessor 105.

The microprocessor 105, when receiving the enable signal E_{LB} from the PLD 104, generates a predetermined response packet and controls a corresponding physical-layer device to send it as a reply to the received packet back to the source.

Further, the microprocessor 105 can access internal registers including farEF (far End Fault) register and Force Link register incorporated in the physical-layer devices 101 and 102 according to IEEE802.3-standard MII. Accordingly, link information indicating link establishment status and/or half/full duplex can be acquired from each physical-layer device. Furthermore, it is possible to force the physical-layer device being in link disconnection status into transmittable state by accessing the Force Link register thereof.

The management switch 20 is provided with a physical-layer device 201 that supports MII (Media Independent Interface) conforming to IEEE802.3 standards, MAC (Media Access Control) layer device 202, and a microprocessor (CPU) 203. The physical-layer device 201 is connected to the physical-layer device 101 of the media converter 10 through the UTP cable. The microprocessor 203 can access internal registers incorporated in the physical-layer device 201 according to IEEE802.3-standard MII. Accordingly, link information indicating link establishment status can be acquired from the physical-layer device 201. Furthermore, it is possible to force the physical-layer device 201 being in link disconnection status into transmittable state by accessing the Force Link register thereof.

The management switch 30 has a circuit structure similar to the management switch 20. Its physical-layer device is connected to the physical-layer device 102 of the media converter 10 through the optical cable. The physical-layer device also supports MII (Media Independent Interface) conforming to IEEE802.3 standards.

In the case where a normal Ethernet packet is transferred, the media converter 10 performs only normal media conversion. More specifically, a normal Ethernet packet received from the management switch 20 is converted into optical data by the media converter 10 and the optical data is transmitted to the destination host computer or management switch 30 through the optical cable. Contrarily, normal optical data received from the management switch 30 is converted into normal Ethernet packet by the media converter 10 and the normal Ethernet packet is sent to the management switch 20 through UTP cable.

In the case where a response test is activated, the management switch 20 generates a special Ethernet packet including predetermined trigger data (hereafter, called a trigger packet P_{TRG}) and transmits it to the media converter 10 through the UTP cable.

### Trigger Packet

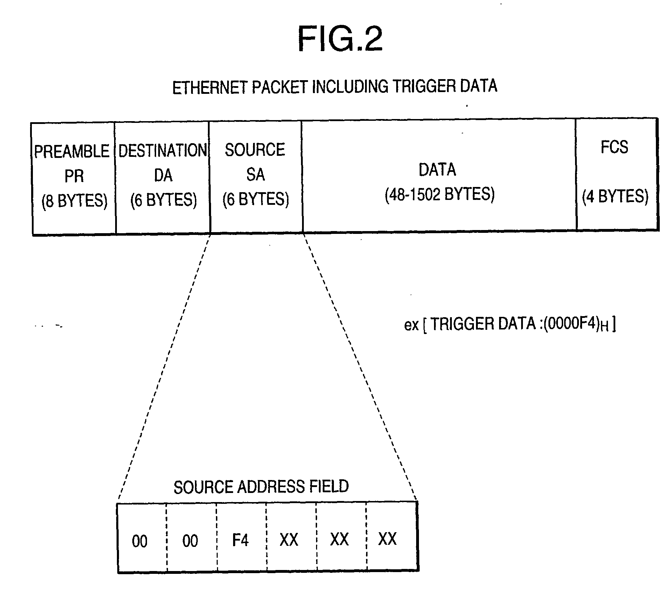

Referring to Fig. 2, similar to a normal Ethernet packet, a trigger packet is composed of 8-byte preamble, 6-byte destination address field, 6-byte source address field, data field of 48-1502 bytes, and 4-byte FCS field. In the case of the trigger packet, predetermined trigger data is written in the source address field.

The trigger data is preferably unique data such as identification number. Here, the ID number assigned to a circuit board incorporated in the media converter 10 is used as the trigger data because the circuit board number is a unique number assigned to the circuit board by the vendor. Such a circuit board number is used as the trigger data to generate a trigger packet having the circuit board number stored in the source address field to transmit it to the media converter 10.

When receiving a packet having its own circuit board number stored in the source address field thereof, the media converter 10 switches into response test mode and generates a response packet to send it back to the management switch 20. When receiving a packet having data other than its own circuit board number stored in the source address field thereof, the media converter 10 passes the packet as a normal packet through.

The response test operation of the media converter will be described hereafter.

### Response test sequence

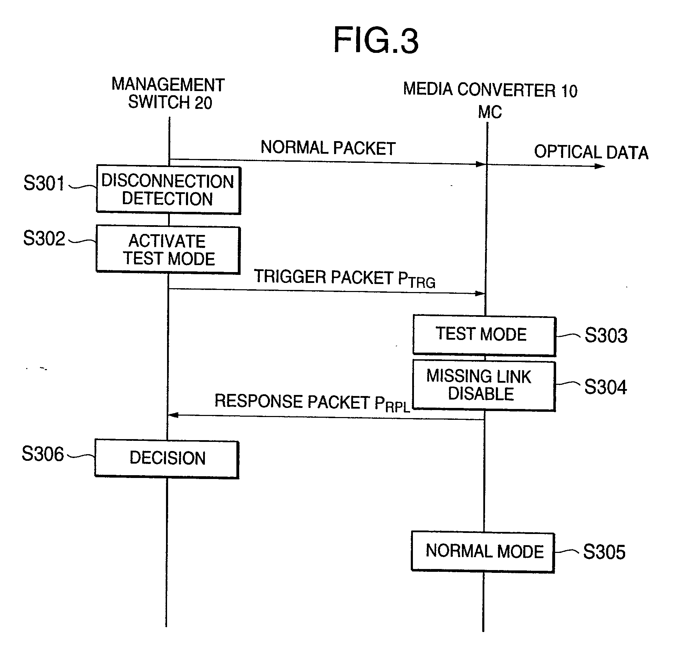

Referring to Fig. 3, when link disconnection is detected in a management switch 20 (step S301), a microprocessor 203 starts a test program (step S302). In the test mode, the microprocessor 203 generates a trigger packet P_{TRG} having the circuit board number of the media converter 10 written in the source address field thereof, and transmits it to the UTP cable through the physical layer device 201.

When the physical layer device 101 receives the trigger packet P_{TRG}, the media converter 10 is switched to the test mode (step S303), and a missing link function is released (Disable) (step S304) and a response packet P_{RPL} is returned through the same physical-layer device 101 to the management switch 20. When a predetermined time has elapsed after the test mode, the media converter 10 returns to the normal mode (step S305).

When the management switch 20 receives the specified response packet P_{RPL}, it is determined that the link is normally established. When the management switch 20 does not receive the response packet P_{RPL} within the predetermined time or the response packet P_{RPL} is not the specified one, it is determined that a failure has occurred (step S306).

In Fig. 3, the response test in the normal mode is shown. However, in the case where the link is disconnected due to the missing link function, the similar response test can be also made. The test operations in the media converter 10 and management switch 20 in the missing-link mode will be described hereafter.

### Test control of media converter

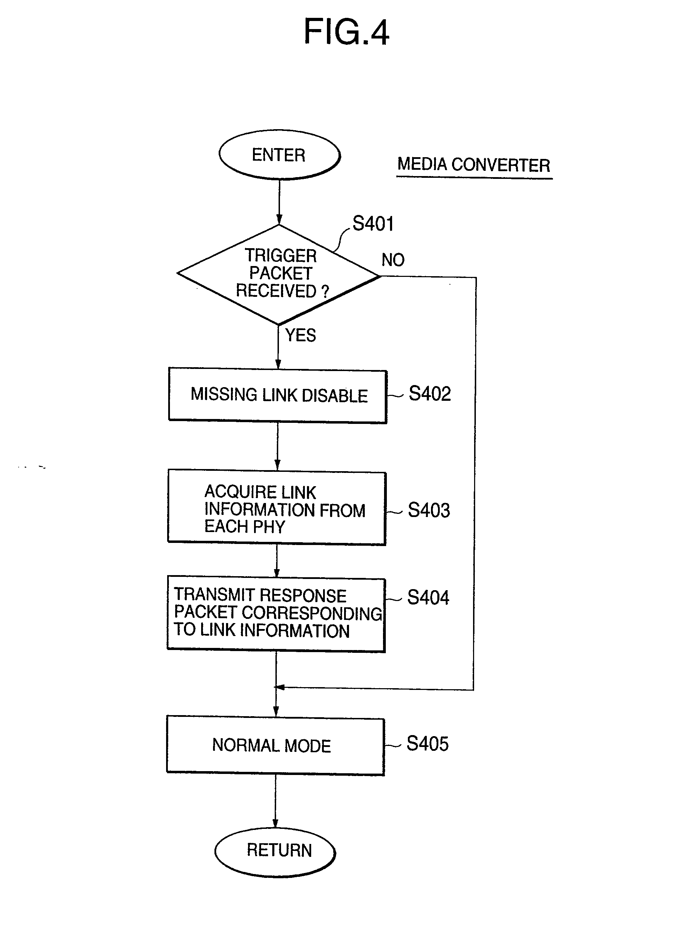

Referring to Fig. 4, when the media converter 10 is in missing link mode, the physical-layer devices 101 and 102 are set to be incapable of transmitting but receiving.

When the physical layer device 101 or 102 has received data, the PLD 104 checks data stored in the FIFO memory 103 at a predetermined timing after the data has been received to determine whether the data stored in the FIFO memory 103 is the specified trigger data or not (step S401.) Here, the trigger data check is performed at the timing of the source address field as shown in Fig. 2.

When the specified trigger data is found in the source address field of the received packet (YES at step S401), the PLD 104 outputs the enable signal E_{LB} to the microprocessor 105, and the microprocessor 105 switches its operation mode to the test mode and disables the missing link function (step S402.)

Then, the microprocessor 105 accesses internal resistors of each physical-layer device to get link information (step S403.) Here, since the physical-layer device 101 has received the trigger packet P_{TRG}, the microprocessor 105 accesses the internal resistors of the corresponding physical-layer device 102 to acquire link information of the optic cable side.

Subsequently, the microprocessor 105 generates a response packet P_{RPL} having the acquired link information written in the source address field thereof, and transmits it from the physical-layer device 101 which has received the trigger packet P_{TRG}, to the source (step S404.) After that, the microprocessor 105 returns to the normal mode (step S405.) When the received packet is not a packet having its own trigger data included therein (No at step S401), the packet is transferred in the normal mode (step S405).

### Test control of management switch

It is assumed that the link of UTP cable side is disconnected due to some cause. In this case, the management switch 20 cannot know where a failure occurs. For example, the management switch 20 detects only the link disconnection of UTP cable side when the UTP cable is cut or when the media converter 10 enables the missing link function caused by disconnection of the optic cable side. In other words, the management switch 20 cannot discriminate between disconnection caused by the UTP cable cut and disconnection caused by the missing link function.

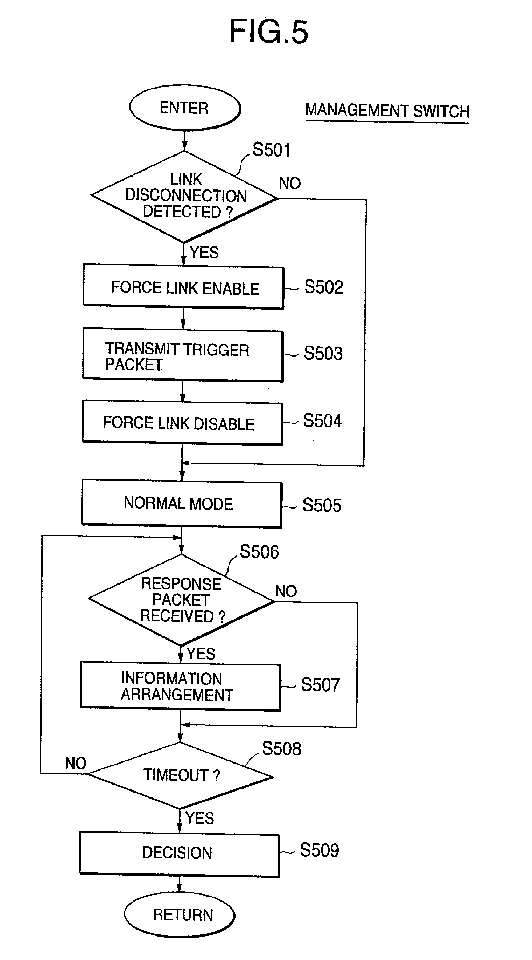

Referring to Fig. 5, when the microprocessor 203 detects the link disconnection of UTP cable side (YES at step S501), the microprocessor 203 accesses the force link register of the physical-layer device 201 to force the physical-layer device 201 into ForceLink Enable status (step S502.)

When the physical-layer device 201 is switched to the ForceLink Enable status, the microprocessor 203 generates a trigger packet P_{TRG} having the specified number (here, circuit board number) of the media converter 10 written in the source address field, and transmits it through the UTP cable. After the microprocessor 203 releases the ForceLink Disable status (step S504), it returns to the normal mode (step S505) and waits for a corresponding response packet to the trigger packet P_{TRG} to be received for the predetermined time (steps S506, S507 and S508.)

When the response packet R_{PRL} is received within in the predetermined time (YES at step S506), the link information of the media converter 10 included in the response packet P_{PRL} is read to analyze (step S507). After the predetermined time has passed (YES at step S508), the judgment based on the received link information is made (step S509.)

For example, in the case where the response packet P_{PRL} was received within the predetermined time, it can be determined that at least the UTP cable and the media converter 10 operates normally and a failure occurs in more distant cable or devices. In this case, it can be determined from the link information included in the response packet P_{PRL} that the failure may occur in the optic cable side.

In the case the response packet P_{PRL} is not received within the predetermined time (NO at step S506 and YES at step S508), it can be determined that the UTP cable and/or the media converter 10 have some failure.

As described above, the media converter according to the first embodiment is automatically switched to the test mode when receiving a predeteremined trigger packet, and a response packet to the trigger packet is sent back to the transmitting side. In this way, the response test can be activated from the cable side.

Then, when the link disconnection is detected, the host side forces the physical-layer device into ForceLink enable status to transmit the trigger packet. When the media converter under the missing link status receives the trigger packet, the media converter disables the missing link function to send the response packet back to the transmitting side. Therefore, when receiving the response packet, the host side can determine that at least the media converter and the link to the media converter operate normally, while when the response packet is not returned, it can be determined that at least one of the media converter and the link has some failure.

### SECOND EMBODIMENT

A media converter according to a second embodiment of the present invention will be described in detail hereafter.

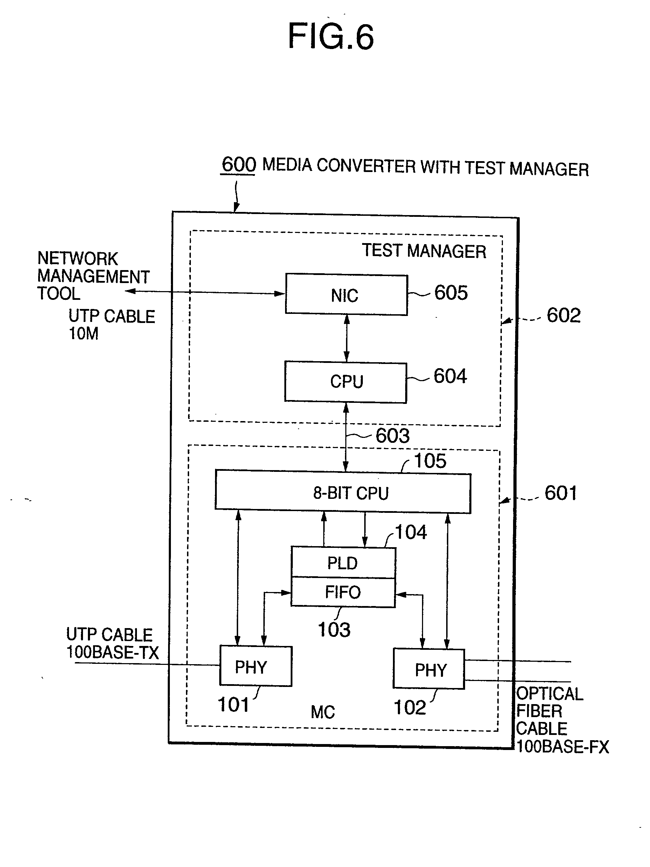

Referring to Fig. 6, a media converter 600 is composed of a media converter 601 and a test manager 602 that is connected to the microprocessor 105 of the media converter 601 through a dedicated bus 603. Since the media converter 601 has the substantially same structure as the media converter 10 as shown in Fig. 1 (FIFO memory 103 and PLD 104 are not shown in Fig. 3), circuit blocks similar to those previously described with reference to Fig. 1 are denoted by the same reference numerals and the descriptions will be omitted.

The test manager 602 includes a microprocessor 604 and a network interface card (NIC) 605. The microprocessor 604 is connected to the microprocessor 105 of media converter 301 through the bus 603. The network interface card 605 is connected with a network management tool (not shown) through a 10M UTP cable.

As will be described later, the test manager 602 monitors the link status, instructs test startup, and analyze and judge the collected information. Though the above-described media converter 601 works in a basically same manner as the converter 10, the difference exists in exchanging control signals and data between the microprocessor 105 and the microprocessor 604 of the test manager 602 through the dedicated bus 603.

An operation of the test system using the media converter 600 will be described below in detail.

### Test Sequence

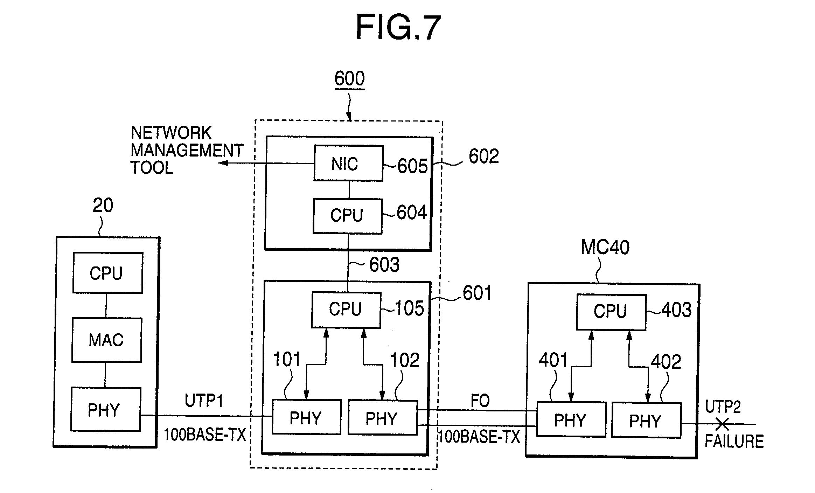

As shown in Fig. 7, it is assumed for simplicity that the media converter 600 is connected with the management switch 20 through UTP cable UTP1 and with the other media converter 40 through the optic fiber cable FO and the media converter 40 is further connected with UTP cable UTP2.

It is further assumed that a failure has occurred in UTP cable UTP2. In this case, since the missing link function is active at both media converters 601 and 40, the entire link is in a disconnection status.

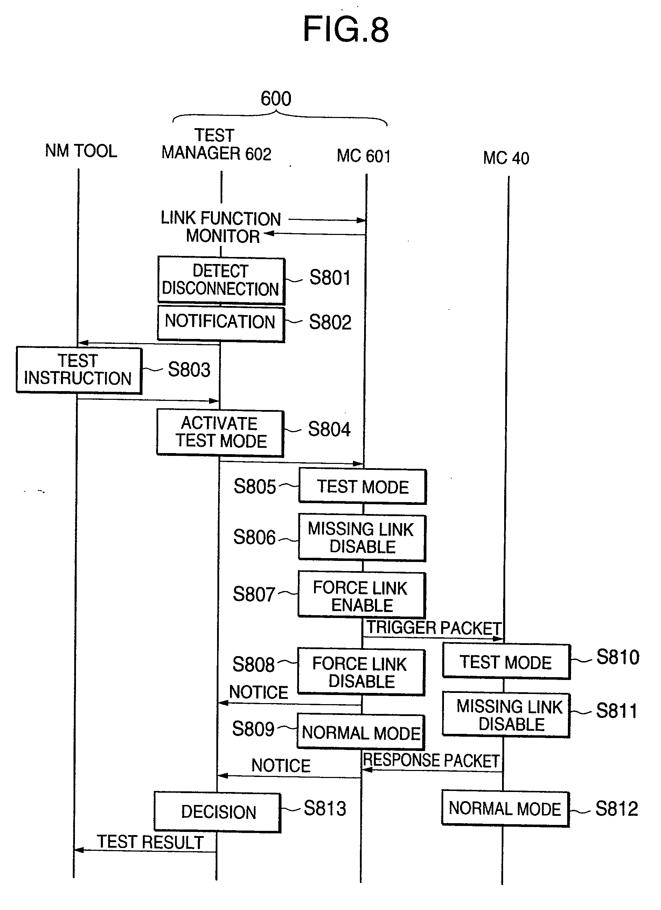

Referring to Fig. 8, the test manager 602 monitors the link status through the media converter 601, and when it detects the link disconnection (step S801), the test manager 602 notifies the network management tool of the link disconnection status (step S802). When the network management tool receives the notification of link disconnection, it instructs the test manager 602 to start the test program (step S803).

When instructed by the network management tool, the test manager 302 starts the test mode (step S804) and causes the media converter 601 to switch to the test mode (Step S805). Then, the media converter 601 disables the missing link function (step S806), and switches the physical-layer device 102 to ForceLink Enable status (step S807) to transmit the trigger packet having the unique number of the media converter 40 written in the source address field thereof to the media converter 40. After transmitting the trigger packet, the media convert 601 disables the ForceLink (step S808) and notifies the test manager 602 of the link information. Thereafter, the media converter 601 returns to the normal mode (step S809) and then waits for the corresponding response packet to the trigger packet to be received.

On the other hand, when having received the trigger packet from the media converter 601, the media converter 40 is switched to the test mode (step S810) and disables the missing link function to transmit a response packet back to the media converter 601 (step S811). Thereafter, the media converter 40 returns to the normal mode (step S812). When the media converter 601 receives the response packet from the media converter 40, the media converter 601 reads the link information from the response packet and notifies the test manager 602.

The test manager 602 analyzes the link information received from the media converters 601 and 40 to judge the location of a failure (step S513), and notifies the network management tool of the test result.

### Test control of media converter

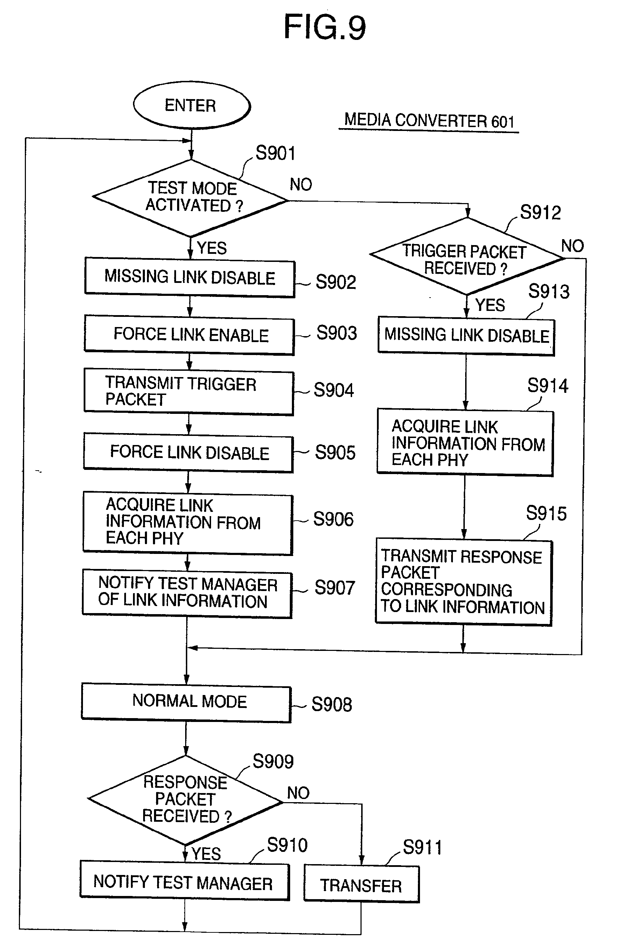

Referring to Fig. 9, when the test manager 602 starts the test mode (YES at step S901), the microprocessor 105 of media converter 601 disables the missing link function (step S902), and switches the physical layer device 102 to ForceLink Enable status to transmit a trigger packet to the next media converter 40 (step S903). After transmitting the trigger packet addressed to the next media converter 40 (step S904), the microprocessor 105 disables ForceLink status (step S905) and then acquires the link information from each physical layer device (step S906). The microprocessor 105 notifies the test manager 602 of the acquired link information through the dedicated bus 603 (step S907).

Then, the microprocessor 105 returns to the normal mode (step S908) and waits for the response packet to the transmitted trigger packet to be received (step S909). When the microprocessor 105 receives the response packet (YES at step S909), it reads the link information stored in the response packet to notify the test manager 602 (step S910). When the microprocessor 105 receives any packet other than the response packet (NO at step S909), it just transfers it (step S911).

When the test mode is not started (NO at step S901), the microprocessor 105 determines whether the trigger packet has been received or not (step S912). When the trigger packet has not been received (NO at step S912), the control goes to the step S608. Specifically, when the physical-layer device 101 or 102 receives a packet, the PLD 104 determines whether the data stored in the FIFO memory 103 is the predefined trigger data (the self-identified number) at the predetermined timing. In this case, the content of FIFO memory 103 is checked at the timing of the source address field thereof as shown in Fig. 2. When the trigger data addressed to itself is found in the source address field, it is determined that the trigger packet has been received.

When the trigger packet is received (YES at step S912), the microprocessor 105 of media converter 601 disables the missing link function (step S913) and acquires the link information from each physical layer device (step S914). As described above, the microprocessor 105 generates the response packet having the acquired link information written in the predetermined location, and transmits it to the source side of trigger packet (step S915). After transmitting the response packet, the control goes to the step S908.

### Test control of test manager

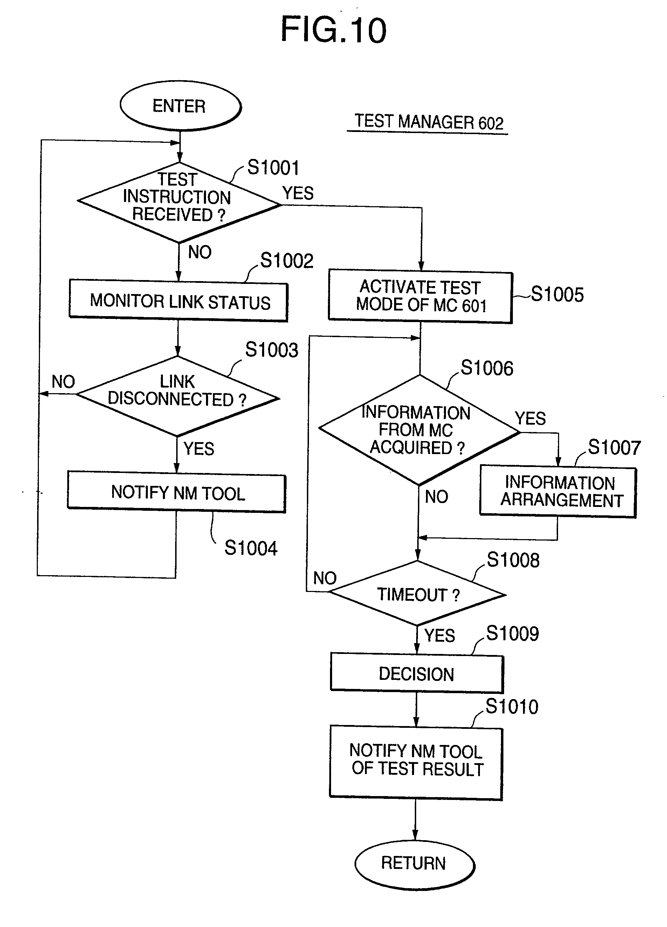

Referring to Fig. 10, the microprocessor 604 of the test manager 602 monitors the link status through the microprocessor 105 of media converter 601 (step S1002) and determines whether the link is disconnected or not (step S1003), as long as it is not instructed to start the test from the network management tool (No at step S1001). When the link status is normal (NO at step S1003), steps S1001 and S1002 are repeated until the test startup instruction is received.

When the microprocessor 604 detects the link disconnection (YES at step S1003), the microprocessor 604 notifies the network management tool of the link disconnection (step S1004) and waits for the test startup instruction to be received from the network management tool.

When the microprocessor 604 is instructed to start the test by the network management tool (YES at step S1001), it starts the test mode of media converter 601 (step S1005) and waits for link information to be received from media converters (here, MC601 and MC40) within a predetermined time-out period (steps S1006-S1008).

Upon receipt of link information from a media converter (YES at step S1006), the microprocessor 604 arranges the link information (step S1007) and, after an elapse of the predetermined time, determines a test result based on the acquired link information (step S1009). For example, if the microprocessor 604 does not acquire link information from the media converter 40 within the predetermined time but from the media converter 601, it can be determined that a failure occurs in the media converter 40 or the optic fiber cable connected between the media converters 601 and 40. In the case where the microprocessor 604 receives the notification within the predetermined time from both media converters 601 and 40, it can be determined from the link information received from the media converter 40 whether a failure occurs on the UTP cable UTP2 (see Fig. 7). The test manager 602 notifies the network management tool of the test result (step S1010).

As described above, in the network composed of plural media converters, when trigger packets are sequentially transmitted to plural media converters, it is possible to detect a failure based on their response packets. Since the above-described failure detection can be made by using only media converter 600 without any additional functions to management switch 20, the system structure is simplified.

The test control of the media converter 40 is similar to that of the media converter 10 as shown in Fig. 4. Therefore, the details will be omitted.

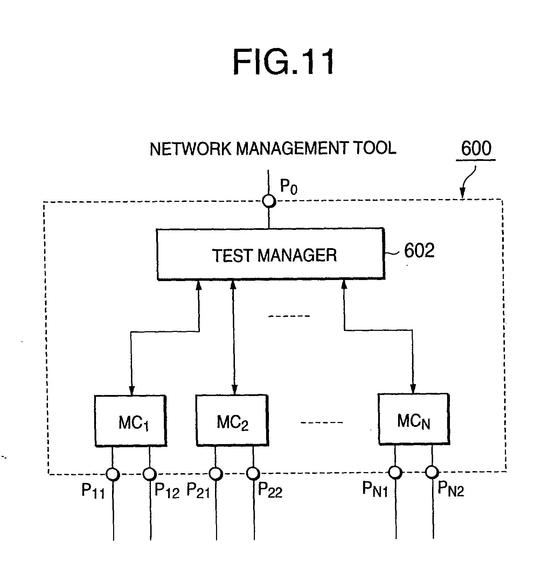

Another embodiment of the media converter with test manager is shown in Fig. 11. This media converter has a port P₀ connected to the network management tool and N pairs of port Pᵢ₁ and Pᵢ₂ (i = 1, 2, 3, ... , N) corresponding to N media converters MC₁ to MC_{N}, respectively. The test manager 302 manages each of the media converters MC₁ to MC_{N} as described above.

As described above, according to the present invention, by sequentially transmitting trigger packets to plural media converters, failure detection can be made based on their response packets. Particularly, when the response packet has not been received from a certain media converter within the predetermined time, it can be determined that a failure has occurred in more distant from this media converter. Therefore, the occurrence of a failure in a link including media converters can be easily detected and the location of the failure can be specified to some extent.

Each media converter can discriminate a trigger packet addressed thereto from other trigger packets and normal packets. Accordingly, the test mode can be activated by receiving the trigger packet and the response packet in response to the trigger packet can be sent back to the source. Therefore the link test can be started from cable side and it can be verified by receiving the response packet that not only the link reach this media converter but this media converter itself are normally operating.

Further, when each media converter receives any trigger packet other than the trigger packet addressed thereto in the status of missing link, the media converter is switched to the normal mode to pass this received packet through. Therefore, since a packet which does not target this media converter for the response test is passed through, the link test can be performed more distant from there.

According to the media converter with test manager, when a link disconnection is detected, the test mode is started to transmit the trigger packet and can perform the failure detection test by receiving the response packet. Since no additional function to a management switch is required, the system structure becomes simplified.

## Claims

1. A media converter for converting from one type of media to another, comprising:
a first physical-layer interface (101) to a first transmission medium;
a second physical-layer interface (102) to a second transmission medium; and
a memory (103) connected between the first and second physical-layer interfaces, for temporarily storing data to be transferred between the first and second physical-layer interfaces,
**characterized by**
a determiner (104) for determining whether a received block of data stored in the memory includes predetermined data at a predetermined position of the received block of data; and
a controller (105) controlling such that, when it is determined that the received block of data stored in the memory includes the predetermined data, a response block of data (P_{RPL}) corresponding to the received block of data (P_{TRG}) is sent from a corresponding one of the first and second physical-layer interfaces back to a source that has transmitted the received block of data.

2. The media converter according to claim 1, wherein each of the received and response blocks of data is an Ethernet packet having a predetermined format.

3. The media converter according to claim 2, wherein the predetermined data is stored in a source address field of the received block of data.

4. The media converter according to any of claims 1-3, wherein the predetermined data is an identification number uniquely assigned to the media converter.

5. The media converter according to claim 1, wherein each of the first and second physical-layer interfaces supports MII (Media Independent Interface) conforming to IEEE802.3 standards.

6. The media converter according to claim 5, wherein when it is determined that the received block of data stored in the memory includes the predetermined data, the controller accesses another one of the first and second physical-layer interfaces to acquire link information from the other physical-layer interface and generates the response block of data corresponding to the link information.

7. The media converter according to claim 5, wherein the controller has a missing link function such that, when one of the first and second physical-layer interfaces comes into link disconnection, the other one of the first and second physical-layer interfaces also comes into link disconnection.

8. The media converter according to claim 7, wherein, when it is determined that the received block of data stored in the memory includes the predetermined data under missing link state, the controller disables the missing link state to transmit the response block of data back to the source.

9. The media converter according to claim 7, wherein, when it is determined that the received block of data stored in the memory does not include the predetermined data under missing link state, the controller switches its operation mode from the missing link state to a normal mode to transfer the received block of data to the other one of the first and second physical-layer interfaces.

10. A control method for controlling a media converter comprising:
a first physical-layer interface (101) to a first transmission medium;
a second physical-layer interface (102) to a second transmission medium; and
a memory (103) connected between the first and second physical-layer interfaces, for temporarily storing data to be transferred between the first and second physical-layer interfaces,
the control method **characterized by** the steps of:
a) determining whether a received block of data stored in the memory includes predetermined data at a predetermined position of the received block of data; and
b) when it is determined that the received block of data stored in the memory includes the predetermined data, generating a response block of data (P_{RPL}) corresponding to the received block of data (P_{TRG}) ; and
c) transmitting the response block of data from a corresponding one of the first and second physical-layer interfaces back to a source that has transmitted the received block of data.

11. The control method according to claim 10, wherein the predetermined data is an identification number uniquely assigned to the media converter.

12. The control method according to claim 10, wherein each of the first and second physical-layer interfaces supports MII (Media Independent Interface) conforming to IEEE802.3 standards.

13. The control method according to claim 12, wherein the step (b) comprises the steps of:
when it is determined that the received block of data stored in the memory includes the predetermined data, accessing another one of the first and second physical-layer interfaces to acquire link information from the other physical-layer interface; and
generating the response block of data corresponding to the link information.

14. A control method for controlling a media converter comprising:
a first physical-layer interface (101) to a first transmission medium;
a second physical-layer interface (102) to a second transmission medium; and
a memory (103) connected between the first and second physical-layer interfaces, for temporarily storing data to be transferred between the first and second physical-layer interfaces, wherein each of the first and second physical-layer interfaces supports MII (Media Independent Interface) conforming to IEEE802.3 standards,
the control method **characterized by** the steps of:
a) determining whether a received block of data stored in the memory includes predetermined data at a predetermined position of the received block of data;
b) when it is determined that the received block of data stored in the memory includes the predetermined data, generating a response block of data (P_{RPL}) corresponding to the received block of data (P_{TRG}) ;
c) determining whether the media converter is in a missing link state such that, when one of the first and second physical-layer interfaces comes into link disconnection, the other one of the first and second physical-layer interfaces also comes into link disconnection; and
d) when it is determined that the received block of data stored in the memory includes the predetermined data under missing link state, disabling the missing link state to transmit the response block of data from a corresponding one of the first and second physical-layer interfaces back to a source that has transmitted the received block of data.

15. The control method according to claim 14, further comprising the step of:
when it is determined that the received block of data stored in the memory does not include the predetermined data under missing link state, disabling the missing link state to transfer the received block of data to the other one of the first and second physical-layer interfaces.

16. The control method according to claim 14, wherein each of the received and response blocks of data is an Ethernet packet having a predetermined format.

17. The control method according to claim 14, wherein the predetermined data is an identification number uniquely assigned to the media converter.

18. A method for detecting a failure on a link including a plurality of media converters, each of which converts from one type of media to another, **characterized by** the steps of:
a) transmitting a block of data (P_{TRG}) to each of the media converters, the block of data having identification data of the media converter written in a predetermined position of the block of data;
b) determining whether a response block of data (P_{RPL}) is received from a corresponding media converter within a predetermined time period; and
c) determining a location of a failure based on a determination result of the step (b).

19. The method according to claim 18, wherein, in the step (c), when a response block of data is not received from a corresponding media converter within a predetermined time period, it is determined that a failure occurs at a location beyond the corresponding media converter.

20. The method according to claim 18, wherein each of the media converters comprises:
a first physical-layer interface (101) to a first transmission medium;
a second physical-layer interface (102) to a second transmission medium; and
a memory (103) connected between the first and second physical-layer interfaces, for temporarily storing data to be transferred between the first and second physical-layer interfaces,
the method further **characterized by** the steps of:
at the media converter,
determining whether a received block of data stored in the memory includes the identification data of its own at a predetermined position of the received block of data;
when it is determined that the received block of data stored in the memory includes the identification data, generating a response block of data corresponding to the received block of data; and
transmitting the response block of data from a corresponding one of the first and second physical-layer interfaces back to a source that has transmitted the received block of data.

21. The method according to claim 20, wherein each of the first and second physical-layer interfaces supports MII (Media Independent Interface) conforming to IEEE802.3 standards.

22. The method according to claim 21, further comprising the steps of:
at the media converter,
when it is determined that the received block of data stored in the memory includes the identification data of its own, accessing another one of the first and second physical-layer interfaces to acquire link information from the other physical-layer interface; and
generating the response block of data corresponding to the link information.

23. The method according to claim 18, wherein each of the media converters comprises:
a first physical-layer interface (101) to a first transmission medium, the first physical-layer interface supporting MII (Media Independent Interface) conforming to IEEE802.3 standards;
a second physical-layer interface (102) to a second transmission medium, the second physical-layer interface supporting MII conforming to IEEE802.3 standards; and
a memory (103) connected between the first and second physical-layer interfaces, for temporarily storing data to be transferred between the first and second physical-layer interfaces,
the method further comprising the steps of:
at the media converter,
a) determining whether a received block of data stored in the memory includes the identification data of its own at a predetermined position of the received block of data;
b) when it is determined that the received block of data stored in the memory includes the identification data, generating a response block of data corresponding to the received block of data;
c) when it is determined that the received block of data stored in the memory includes the identification data in a missing link state, disabling a missing link state; and
d) transmit the response block of data to a source that has transmitted the received block of data.

24. The method according to claim 23, further comprising the step of:
when it is determined that the received block of data stored in the memory does not include the identification data under the missing link state, disabling the missing link state to transfer the received block of data to the other one of the first and second physical-layer interfaces.

25. A system for detecting a failure on a link including a plurality of media converters, each of which converts from one type of media to another, **characterized by**:
a test manager (602) connected to one of the media converters (601),
wherein each of the media converters (601) comprises:
a first physical-layer interface (101) to a first transmission medium;
a second physical-layer interface (102) to a second transmission medium;
a memory (103) connected between the first and second physical-layer interfaces, for temporarily storing data to be transferred between the first and second physical-layer interfaces; and
a media converter controller (104, 105) determining whether a received block of data stored in the memory includes the identification data of its own at a predetermined position of the received block of data; when it is determined that the received block of data stored in the memory includes the identification data, generating a response block of data (P_{RPL}) corresponding to the received block of data (P_{TRG}) ; and transmitting the response block of data from a corresponding one of the first and second physical-layer interfaces back to a source that has transmitted the received block of data, and
the test manager (602) comprises:
an interface (605) to a network manager; and
a test manager controller (604) transmitting a block of data to each of the media converters, the block of data having identification data of the media converter written in a predetermined position of the block of data; determining whether a response block of data is received from a corresponding media converter within a predetermined time period; and determining a location of a failure based on a determination result.

26. The system according to claim 25, wherein the test manager controller determines that a failure occurs at a location beyond the corresponding media converter when a response block of data is not received from a corresponding media converter within a predetermined time period.

27. The system according to claim 25, wherein each of the first and second physical-layer interfaces supports MII (Media Independent Interface) conforming to IEEE802.3 standards.

28. The system according to claim 27, wherein the media converter controller accesses another one of the first and second physical-layer interfaces to acquire link information from the other physical-layer interface when it is determined that the received block of data stored in the memory includes the identification data of its own and generates the response block of data corresponding to the link information.

29. The system according to claim 27, wherein the test manager controller disables the missing link state when a test is started and forces a corresponding physical-layer interface into transmittable state to transmit the block of data to the link.

30. The system according to claim 29, wherein the media converter controller determines whether a received block of data stored in the memory includes the identification data of its own at a predetermined position of the received block of data; generates a response block of data corresponding to the received block of data when it is determined that the received block of data stored in the memory includes the identification data; disables a missing link state when it is determined that the received block of data stored in the memory includes the identification data in the missing link state; and transmits the response block of data to a source that has transmitted the received block of data.

31. The system according to claim 30, wherein when it is determined that the received block of data stored in the memory does not include the identification data under the missing link state, the media converter controller disables the missing link state to transfer the received block of data to the other one of the first and second physical-layer interfaces.

32. A media converter with a test manager (602) for use in a failure detection of a link composed of a plurality of types of transmission media, comprising:
a first physical-layer interface (101) to a first transmission medium;
a second physical-layer interface (102) to a second transmission medium;
a memory (103) connected between the first and second physical-layer interfaces, for temporarily storing data to be transferred between the first and second physical-layer interfaces;
a media converter controller (104, 105) determining whether a received block of data stored in the memory includes the identification data of its own at a predetermined position of the received block of data; when it is determined that the received block of data stored in the memory includes the identification data, generating a response block of data (P_{RPL}) corresponding to the received block of data (P_{TRG}) ; and transmitting the response block of data from a corresponding one of the first and second physical-layer interfaces back to a source that has transmitted the received block of data;
an interface (605) to a network manager; and
a test manager controller (604) transmitting a block of data to each of the media converters, the block of data having identification data of the media converter written in a predetermined position of the block of data; determining whether a response block of data is received from a corresponding media converter within a predetermined time period; and determining a location of a failure based on a determination result.

33. A media converter with a test manager for use in a failure detection of a link composed of a plurality of types of transmission media, comprising:
a plurality of media converter (MC₁-MC_{N}); and
a test manager (602) for managing the media converters,
wherein each of the media converter comprises:
a first physical-layer interface (101) to a first transmission medium;
a second physical-layer interface (102) to a second transmission medium;
a memory (103) connected between the first and second physical-layer interfaces, for temporarily storing data to be transferred between the first and second physical-layer interfaces; and
a media converter controller (104, 105) determining whether a received block of data stored in the memory includes the identification data of its own at a predetermined position of the received block of data; when it is determined that the received block of data stored in the memory includes the identification data, generating a response block of data (P_{RPL}) corresponding to the received block of data (P_{TRG}) ; and transmitting the response block of data from a corresponding one of the first and second physical-layer interfaces back to a source that has transmitted the received block of data, and
the test manager comprises:
an interface (605) to a network manager; and
a test manager controller (604) transmitting a block of data to each of the media converters, the block of data having identification data of the media converter written in a predetermined position of the block of data; determining whether a response block of data is received from a corresponding media converter within a predetermined time period; and determining a location of a failure based on a determination result.
